(19) Europäisches Patentamt
European Patent Office
Office européen des brevets

(11) **EP 3 683 677 A1**

(12) **EUROPEAN PATENT APPLICATION**

(43) Date of publication:
**22.07.2020 Bulletin 2020/30**

(51) Int Cl.:
***G06F 9/50*** *(2006.01)*

(21) Application number: **19151879.4**

(22) Date of filing: **15.01.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Bröring, Arne
81541 München (DE)**
• **Seeger, Jan
80801 München (DE)**
• **Withanage Don, Malith
81377 München (DE)**

(54) **METHOD AND ALLOCATOR FOR ALLOCATING COMPUTATION RESOURCES AMONGST A PLURALITY OF DEVICES ARRANGED IN A NETWORK**

(57) Embodiments for allocating computation resources as described herein generally involve an optimization of an allocation of computations resources amongst devices in order of a network in order to minimize an overall energy consumption for collaboratively executing an application. This dynamic allocation of computation resources with the aim of minimizing an energy consumption is particularly beneficial for battery-driven devices such as wireless industrial automation devices of today. According to an embodiment, a data throughput behavior of computations is considered along with energy constraints of devices and network transmission energy for calculating the optimal allocation of computations within the network of devices.

**Description**

TECHNICAL FIELD

The present embodiments relate to a method for allocating computation resources amongst a plurality of devices arranged in a network. More specifically, the present embodiments relate to a method for optimizing an allocation of computation resources amongst devices in order to minimize an overall energy consumption for collaboratively executing an application.

BACKGROUND

Advancements in the field of shared computing have led to a development of cloud computing infrastructure. Such a cloud computing infrastructure may allocate one or more computational resources to one or more devices within a shared network. One or more devices may utilize one or more computational resources to perform predetermined operations, e.g. to execute an application.

Wireless devices are growingly advancing into industrial shop floor environments due to the advantages that they possess over cabled technologies, such as mobility, flexibility, coverage over hard-to-reach locations, as well as lower installation and maintenance cost. However, battery-driven wireless devices are often constrained with limited battery capacity and computation capability.

A commonly employed embodiment of wireless industrial automation devices are sensor devices organized in a Wireless Sensor Network or WSN. Contemporary Wireless Sensor Network take advantage of an increasing presence of near-edge cloud computing resources - also referred to as fog computing - for decentralizing an execution of an application by moving a considerable amount of computation to edges of the network close to sensors or other data sources.

Emerging cloud computing technology, owing to its elastic resource allocation, offers an opportunity to extend the capabilities of wireless devices for energy-hungry applications.

Although it is already known to decompose an application into a plurality of computing operations and distribute an execution of these computing operations over a plurality of computation resources amongst the plurality of devices, lowering energy consumption and saving computation resources amongst devices is no optimization criteria for an allocation of computation resources so far. This is a major drawback in cases where at least one battery-driven device is part of the network.

Still further, an allocation of resources is mainly entrusted to manual adjustments during an engineering phase. Although such manual adjustments are manageable when setting up homogeneous device networks with negligible complexity and size, an optimized allocation of resources in heterogeneous and/or larger scale networks is virtually unsuitable in a manual way.

Accordingly, there is a need in the art to dynamically facilitate adjustments in an optimized allocation of computation resources amongst a plurality of devices wherein minimizing an overall energy consumption is at least part of the optimizing task.

SUMMARY

Embodiments herein generally relate to a method for dynamically optimizing an allocation of computations resources amongst devices in order to minimize energy consumption for collaboratively executing an application.

One preliminary consideration according to the present embodiments in addressing existing problems with the allocation of computation resources is a dynamical nature in adjusting the allocations, contrasting previously applied manual adjustments left statically upon completing an engineering phase.

A further approach according to the present embodiments uses an assessment of energetic parameters in addition other parameters of at least one device allowing for an optimization of an energy consumption for specific - particularly battery driven - devices within a network of heterogeneous devices and/or for an overall energy consumption within the network.

In one embodiment, a computer-implemented method for allocating computation resources amongst a plurality of devices arranged in a network is disclosed, the method including the steps of:

- receiving at least one allocation request related to an application specification delivered by at least one of said plurality of devices, the application specification specifying a composition of computations to be allocated amongst at least one of the plurality of devices;
- requesting a resource model from a network repository, the resource model providing a labeled graph representation of the plurality of devices wherein at least one label comprises energetic parameters of at least one device;

- applying a utility function using said energetic parameters to thereby generate a utility function result being optimized for a minimal energy consumption; and;
- using the utility function result to dynamically adjust an allocation of at least one of the computation resources amongst said plurality of devices.

According to an embodiment, an allocator comprising a processor and a data storage device having stored thereon a computer executable program code is provided.

According to a further embodiment, a non-transitory computer-readable storage medium having stored thereon computer executable program code is provided.

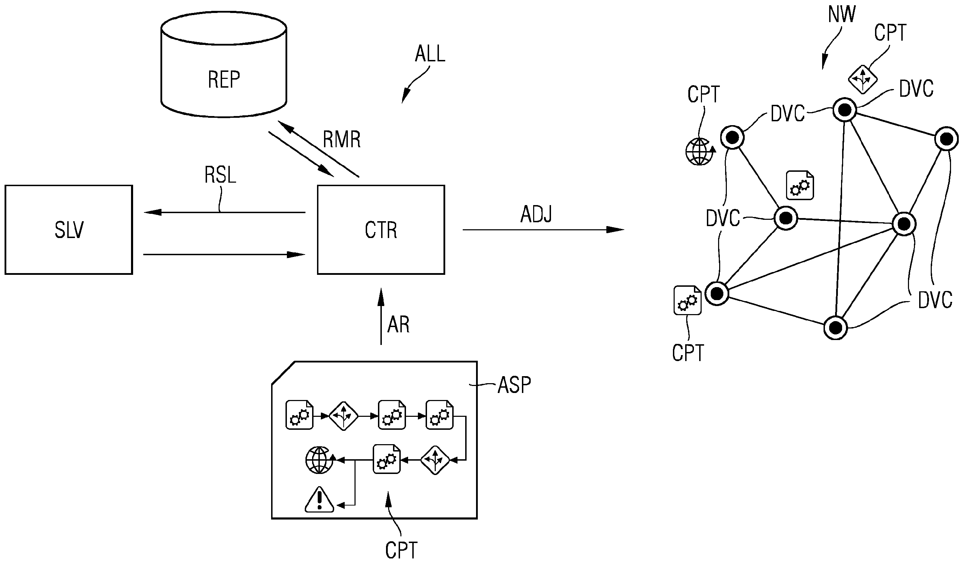

DESCRIPTION OF THE DRAWING

The objects as well as further advantages of the present embodiments will become more apparent and readily appreciated from the following description of the preferred embodiments, taken in conjunction with the accompanying drawing in which the FIG shows an allocator controlling at least one device in a network.

DETAILED DESCRIPTION

The FIG shows an allocator ALL on a left side controlling at least one of a plurality of devices DVC organized in a network NW.

The allocator ALL according to an embodiment is organized in modules which may include a controller CTR, a repository REP and a solver SLV . Each of said modules CTR, REP, SLV may be integrated within the allocator ALL or, alternatively operating in a remote fashion using a communication link established at least temporarily between two or more modules CTR, REP, SLV of the allocator ALL. Each of said modules CTR, REP, SLV may be implemented as hardware or software or a mixture of both.

In an exemplary network NW comprising seven devices DVC as depicted on the right side of the FIG, the devices DVC are randomly interconnected with one or more other devices DVC in order to build the network NW. The interconnections between devices DVC are of a wireless or wired nature.

According to an embodiment, the allocator ALL may be part of the network NW or at least temporarily connected to one or more devices DVC of the network NW. Alternatively, some modules CTR,REP,SLV of the allocator ALL are distributed over respected devices DVC of the network NW. Alternatively, the modules CTR,REP,SLV of the allocator ALL are implemented on one or more devices DVC. The implementation may be partially or exclusively, wherein a partial implementation means that the device DVC may simultaneously or alternately operate in a first mode for operating the allocator module operations and in a second mode for operating the »normal« device or network node operations, e.g. as by operating as a sensor.

A method for allocating computation resources is started by a step of receiving, at the controller CTR of the allocator ALL, at least one allocation request AR related to an application specification ASP delivered by at least one of said plurality of devices DVC, the application specification ASP specifying a composition of computations CPT to be allocated amongst at least one of the plurality of devices DVC.

The allocation request AR received by the controller CTR may be requested by the controller CTR or delivered by one of the devices DVC without a particular request by the controller CRT, e.g. in answer to an event or a condition triggered by one of the modules CTR, REP, SLV of the allocator ALL or by a device DVC.

The computations CPT within the application specification ASP are specifications of executable computation fragments of a - not shown - application. Executable computations fragments CPT as shown on the right side of the FIG relate to a device DVC on which one or more executable computations fragments CPT are executed as described further down below. A distributed execution of the executable computation fragments CPT on one or more devices DVC is executing the application specified by the application specification ASP.

By a subsequent step the controller CTR requests a resource model from the network repository REP by a request RMR. The resource model stored in the repository REP provides a representation of the network NW and its devices DVC and embodied by a labeled graph, preferably a fully connected directed graph, of the plurality of devices DVC. Some or all labels of a device, characterized by a node of the graph, comprise energetic parameters of the device DVC.

The network repository REP answers the request RMR by transmitting requested portions of the resource model stored in the repository REP to the controller.

By a subsequent step, a utility function is applied using structural data, energetic and other parameters extracted from portions of the resource model received by the preceding step.

The utility function is either applied by the controller CTR itself or, alternatively, requested by the controller CTR for application to the solver SLV by a solver request RSL. The solver request RSL sent form the controller CTR to the solver RSL as depicted may either include the structural data and parameters which have been temporarily stored by the controller CTR or, alternatively, refer to a further data exchange in succession. Alternatively, the server request may include a reference to a - not shown - remote storage location, e.g. hosted on a device DVC of the network NW, wherein these structural data and parameters are temporarily stored for collection by the solver SLV.

The utility function is using said energetic parameters to thereby generate a utility function result being optimized for a minimal energy consumption. The utility function result is then temporarily stored on the controller.

In a subsequent step, the utility function result is used to dynamically adjust an allocation of at least one of the computation resources amongst said plurality of devices DVC. The controller CTR effects this adjustment of allocation by one or a series of adjustment requests ADJ which are directly addressed to one or more devices DVC on the network. Each device DVC receiving an adjustment requests ADJ by the controller is then allocating computation resources in order to execute computations fragments CPT assigned by the controller CTR.

The described embodiments for optimal computation allocation use a novel approach focusing on optimizing the overall energy consumption, thereby considering at least one energetic parameter of one or more devices.

According to an embodiment, a throughput parameter of a computation is considered. The throughput parameter $T_i$ is defined as a quantity of output data per seconds of computation. The quantity of data output or sent by the device per seconds of computation may be expressed by the number of data packets sent per second of a computation. This throughput parameter is to be regarded as energetic parameter as mentioned for following reasons: Computations with high throughput generate large amounts of data. Aiming for an energy-optimal allocation of computation resources, it is desired to allocate computations requiring a high throughput on nodes having low energy costs, i.e., high computational power and low network transmission costs. Conversely, it is advantageous to put computations with low throughput on devices with high communication costs, as the amount of data sent - hence: the throughput parameter - is reduced. This approach of evaluating the throughput parameter or the quantity of output data - or data sent by the device - per seconds of computation does not consider a quantity of input data - or data received by the device - per seconds of computation for the reason that receiving data causes a neglectable amount of energy consumption as compared to the energy consumption for sending data. In techno-economic terms, the energy costs of receiving packets are negligible compared to the energy costs of sending packets.

According to an embodiment, two further parameters are considered along with the throughput parameter of a computation, namely a network data transmission energy and a power consumption of the device. The network data transmission energy $n_{(u,v)}$ represents the energy needed for sending a packet over a network edge. The power consumption $P_u$ of the device represents the energy in mwatt (milli Watt) consumed by the device in order to calculate one computation.

The solver SLV within the allocator ALL utilizes linear integer programming to determine the optimal allocation of computations. The rationale behind this optimization is to distribute computations between the devices DVC - or inside a cluster of selectable devices DVC - in a way that an energy consumption of particular devices, preferably battery-driven devices, is minimized. Preferably, the overall energy consumption, i.e. the total energy consumption of all devices in the network NW is to be minimized.

In general, applications can be described by data flows from several sources to several destinations of data computations CPT. The resulting application specification ASP is formalizing this structured data flow. In order to arrive at an optimal allocation of computations, the application is decomposed into independent computations CPT based on the data flow which are distributed amongst resources in the network NW in a way that the overall energy consumption is minimized. The total energy consumption is defined as a sum of energy consumptions of all paths in the application. These paths are interconnecting the computations CPT in the application specification ASP.

Further parameters are taken into account to determine the optimal allocation of computations, including:

- A graph $G_c$ representing the application with its computations;

- A set of vertices $V_c$ or computations within the graph $G_c$ representing the application;

- A set of edges $L_c$ or computations within the graph $G_c$ representing the application;

- Resources $C_i$ required to execute a data unit within the set of computations of the graph $G_c$ representing the application;

- An execution time $R_i$ per data unit of $i \in V_c$ on a reference processor;

- The (already described above) Throughput $T_i$ of the computation $i \in V_c$;

- A graph $G_{res}$ representing computing and network resources, herein also referred to as resource model;

- A set $V_{res}$ of vertices or computing nodes of u $\in$ $G_{res}$;

- A set $L_{res}$ of edges or logical links of a computing node u $\in$ $G_{res}$;

- An amount $C_u$ of resources available on a computing node u $\in$ $V_{res}$;

- A processing speed-up $S_u$ on a computing node u $\in$ $V_{res}$;

- The (already described above) network data transmission energy $n_{(u,v)}$ for (u,v) $\in$ $E_{res}$;

- The (already described above) power consumption $P_u$ of the device u $\in$ $V_{res}$;

- A subset of nodes $V^i_{(res)} \subseteq V_{(res)}$ where computing nodes i $\in$ $V_c$ can be placed

- A placement $X_{(i,u)}$ of i $\in$ $V_c$ on u $\in$ $V^i_{res}$

- A placement $y_{(i,j),(u,v)}$ of (i,j) $\in$ $E_c$ on (u, v) $\in$ $E_{res}$

Hereinafter, a calculus for a determination of the optimal allocation in order to minimize the overall energy consumption E is described below. The utility function E below calculates an energy consumption of the most energy-intensive path in the task graph. Then, the solver is used to find the assignment where E has the lowest possible value. This is the optimal solution for the assignment problem. Thus, the solver finds the assignment with the lowest possible total energy by minimizing *E*.

Referring now to the utility function *E* below for calculating the energy consumption of the most energy-intensive path in the task graph:

$$E = \max_{p \epsilon \pi G_s} E_p$$

Wherein $E_p$ is the energy consumption along path *p* and wherein $\pi_{Gc}$ is a set of all source-sink paths from $G_c$.

Given a placement vector x (and resulting y) and a path $p = \{i_1, i_2, ... i_{n_p}\}$ the result of $E = E(x,y) = \max_{p \epsilon \pi G_s} E_p(x,y)$ with $E_p(x,y)$ is defined as:

$$E_p(x,y) = \sum_{k=1}^{Np} E_{i_k}(x) + \sum_{k=1}^{Np-1} N_{(i_k, i_{k+1})}(y)$$

$$E_i(x) = \sum_{u \in V\frac{i}{res}} \frac{R_i}{S_u} P_u x_{i,u}$$

$$N_{(i,j)}(y) = \sum_{(u,v) \in V\frac{i}{res} \times V\frac{i}{res}} T_i n_{(u,v)} y_{(i,j),(u,v)}$$

Here $Ei(x)$ denotes an energy consumption of the device for processing computation *i* mapped on device *u*. N $(i,j)$ $(y)$ denote the data transmission energy from *i* to *j* when computation *u* and *v* are mapped to *i* and *j*.

The following mathematical constraints are taken into account as well. Thereby, *F(x,y)* is defined as a multi objective utility function that combines energy and response time optimized utility functions using the Simple Additive Weighting Technique.

$$F_{ec}(x,y) = \omega_e \frac{E_{max} - E(x,y)}{E_{max} - E_{min}} + w_r F(x,y)$$

$$\max_{x,y,e,r} F'_{ec}(x,y,e,r)$$

$$F'_{ec}(x,y,e,r) = \omega_e \frac{E_{max} - e}{E_{max} - E_{min}} + \omega_r F'(x,y,r)$$

$$e \geq \sum_{k=1}^{n_p} \sum_{u \in V_{res}^{i_k}} \frac{R_{i_k}}{S_u} P_u x_{i_k,u} + \sum_{k=1}^{n_p-1} \sum_{(u,v) \in V_{res}^k \times V_{res}^{k+1}} T_k\, n_{(u,v)} y_{k,k+1),(u,v)} \forall p \in \pi_{G_c}$$

$$\sum_{i \in V_c} C_i\, x_{i,u} \leq C_u \qquad \forall u \in V_{res}$$

$$\sum_{u \in V_{res}^i} x_{i,u} = 1 \qquad \forall_i \in V_c$$

$$x_{j,u} = \sum_{u \in V_{res}^i} y_{(i,j),(u,v)} \qquad \forall (i,j) \in L_c, u \in V_{res}^i$$

$$x_{j,u} = \sum_{u \in V_{res}^i} y_{(i,j),(u,v)} \qquad \forall (i,j) \in L_c, v \in V_{res}^i$$

$$x_{i,u} \in \{1,0\} \qquad \forall i \in V_c, u \in V_{res}^i$$

$$y_{(i,j),(u,v)} \in \{1,0\} \quad \forall (i,j) \in L_c, u, v \in V_{res}^i \times V_{res}^j$$

Wherein $F$ and $F'$ represent response-time optimizing utility functions. Since $F_{ec}$ is not linear with x and y, as $E(x,y) = \max E_p$ is not a linear term, and since a representation of the function $F(x,y)$ in a linear format is needed to solve the function, an auxiliary variable $e$ is introduced, which represents the energy consumption of the optimization problem. Introducing the auxiliary variable $e$, $F'_{ec}$ is linear with respect to e,x,y.

Here, since $F(x,y)$ is inversely proportional to $E(x,y)$ and e, a maximization problem is to be solved by minimizing e, the reciprocal value of the energy consumption of the deployment. This paves the way for using Integer Linear Programming according to an embodiment for solving the above optimization problem subjected to the constraints defined below.

According to an embodiment, a battery power level of a device is considered by weighting the battery power level into the mathematical relations above, re-purposing $R_i$ as the battery consumption per data unit of computation i on a reference device, $S_u$ as the battery power capacity of the device relative to the reference device, and $C_i$ as the initial battery level. In environments further including non-battery powered devices, however, this embodiment would have to be furtherly refined.

So far, embodiments described above are not considering an energy used by a device for receiving data for the reasons stated above. The throughput parameter used so far merely captures the output energy. In order to refine the determination of energy consumption, an ingest parameter is used according to a further embodiment. This ingest parameter is used for representing the quantity of input data - or data received by the device - per seconds of computation. The quantity of data received by the device per seconds of computation may be expressed by the number of received data packets per second of a computation.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

**Claims**

1. A method for allocating computation resources amongst a plurality of devices arranged in a network, the method including the steps of:

   - receiving at least one allocation request related to an application specification delivered by at least one of said plurality of devices, the application specification specifying a composition of computations to be allocated amongst at least one of the plurality of devices;
   - requesting a resource model from a network repository, the resource model providing a labeled graph representation of the plurality of devices wherein at least one label comprises energetic parameters of at least one device;
   - applying a utility function using said energetic parameters to thereby generate a utility function result being optimized for a minimal energy consumption; and;
   - using the utility function result to dynamically adjust an allocation of at least one of the computation resources amongst said plurality of devices.

2. The method according to claim 1, wherein the utility function result is calculated by a linear integer programming solver.

3. The method according to one of the aforementioned claims, wherein at least one label of the labeled graph includes one of:

   - a throughput parameter representing a quantity of output data per seconds of one of said computations;
   - a network data transmission energy representing an energy needed for sending a packet over a network edge; and;
   - a power consumption representing an energy consumed by at least one of the plurality of devices for calculating one of said computations.

4. The method according to one of the aforementioned claims, wherein the utility function is adapted to calculate an energy usage of a most energy-intensive path in the graph.

5. The method according to 4, wherein a linear integer programming solver is used to identify an assignment wherein said utility function has the lowest possible value.

6. The method according to one of the aforementioned claims, wherein the labeled graph is a labeled fully connected directed graph.

7. An allocator comprising:

   - a processor; and;
   - a data storage device having stored thereon computer executable program code, which, when executed by the processor, causes the processor to:

- receive at least one allocation request related to an application specification delivered by at least one of said plurality of devices, the application specification specifying a composition of computations to be allocated amongst at least one of the plurality of devices;
- request a resource model from a network repository, the re-source model providing a labeled graph representation of the plurality of devices wherein at least one label comprises energetic parameters of at least one device;
- apply a utility function using said energetic parameters to thereby generate a utility function result being optimized for a minimal energy consumption; and;
- use the utility function result to dynamically adjust an allocation of at least one of the computation resources amongst said plurality of devices.

8. A non-transitory computer-readable storage medium having stored thereon computer executable program code, which, when executed by a computer, causes the computer to:

- receive at least one allocation request related to an application specification delivered by at least one of said plurality of devices, the application specification specifying a composition of computations to be allocated amongst at least one of the plurality of devices;
- request a resource model from a network repository, the resource model providing a labeled graph representation of the plurality of devices wherein at least one label comprises energetic parameters of at least one device;
- apply a utility function using said energetic parameters to thereby generate a utility function result being optimized for a minimal energy consumption; and;
- use the utility function result to dynamically adjust an allocation of at least one of the computation resources amongst said plurality of devices.

EP 3 683 677 A1

Europäisches
Patentamt

European
Patent Office

Office européen
des brevets

# EUROPEAN SEARCH REPORT

Application Number

EP 19 15 1879

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/227397 A1 (CA, INC.) 13 August 2015 (2015-08-13) * abstract * * paragraphs [0001] - [0002] * * paragraph [0004] * * paragraphs [0024] - [0025] * * paragraphs [0032] - [0033] * * paragraph [0055] * * paragraphs [0066] - [0068] * * figures 6,12 * | 1-8 | INV. G06F9/50 |
| A | US 2011/213508 A1 (INTERNATIONAL BUSINESS MACHINES CORPORATION) 1 September 2011 (2011-09-01) * the whole document * | 1-8 | |
| A | WO 2011/076486 A1 (INTERNATIONAL BUSINESS MACHINES CORPORATION) 30 June 2011 (2011-06-30) * the whole document * | 1-8 | |
| A | HARADA, USHIO, NAKAMOTO: "Adaptive fair resource allocation for energy and QoS trade-off management", IEICE TRANSACTIONS ON FUNDAMENTALS OF ELECTRONICS, COMMUNICATIONS AND COMPUTER SCIENCES, 1 November 2008 (2008-11-01), pages 3245-3252, XP001517412, * the whole document * | 1-8 | TECHNICAL FIELDS SEARCHED (IPC)  G06F |
| A | US 2011/271283 A1 (INTERNATIONAL BUSINESS MACHINES CORPORATION) 3 November 2011 (2011-11-03) * the whole document * | 1-8 | |

The present search report has been drawn up for all claims

| Place of search | Date of completion of the search | Examiner |
|---|---|---|
| The Hague | 21 June 2019 | Tomàs Blanch, F |

EPO FORM 1503 03.82 (P04C01)

## ANNEX TO THE EUROPEAN SEARCH REPORT
## ON EUROPEAN PATENT APPLICATION NO.

EP 19 15 1879

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2019

| Patent document cited in search report | | | Publication date | Patent family member(s) | | | Publication date |
|---|---|---|---|---|---|---|---|
| US 2015227397 | A1 | | 13-08-2015 | NONE | | | |
| US 2011213508 | A1 | | 01-09-2011 | CN | 102770847 | A | 07-11-2012 |
| | | | | DE | 112011100143 | T5 | 04-10-2012 |
| | | | | JP | 5756478 | B2 | 29-07-2015 |
| | | | | JP | 2013520734 | A | 06-06-2013 |
| | | | | US | 2011213508 | A1 | 01-09-2011 |
| | | | | US | 2013261826 | A1 | 03-10-2013 |
| | | | | US | 2017031423 | A1 | 02-02-2017 |
| | | | | WO | 2011104108 | A1 | 01-09-2011 |
| WO 2011076486 | A1 | | 30-06-2011 | TW | 201137776 | A | 01-11-2011 |
| | | | | WO | 2011076486 | A1 | 30-06-2011 |
| US 2011271283 | A1 | | 03-11-2011 | US | 2011271283 | A1 | 03-11-2011 |
| | | | | US | 2012216205 | A1 | 23-08-2012 |
| | | | | US | 2014075448 | A1 | 13-03-2014 |

EPO FORM P0459

For more details about this annex : see Official Journal of the European Patent Office, No. 12/82